(19) Europäisches Patentamt
European Patent Office
Office européen des brevets

(11) Veröffentlichungsnummer: **0 332 987 B1**

(12) # EUROPÄISCHE PATENTSCHRIFT

(45) Veröffentlichungstag der Patentschrift: **27.12.91 Patentblatt 91/52**

(21) Anmeldenummer: **89103967.9**

(22) Anmeldetag: **07.03.89**

(51) Int. Cl.$^5$: **C08L 57/00,** C08L 51/04, C08L 25/12, C08L 55/02, // (C08L57/00, 51:04, 87:00), (C08L51/04, 57:00, 87:00), (C08L25/12, 55:02, 87:00), (C08L55/02, 25:12, 87:00)

(54) **Thermoplastische Formmassen mit hoher Zähigkeit und guter Schmelzverarbeitbarkeit.**

(30) Priorität: **17.03.88 DE 3808845**

(43) Veröffentlichungstag der Anmeldung: **20.09.89 Patentblatt 89/38**

(45) Bekanntmachung des Hinweises auf die Patenterteilung: **27.12.91 Patentblatt 91/52**

(84) Benannte Vertragsstaaten: **DE ES FR GB IT NL**

(56) Entgegenhaltungen: **EP-A- 0 222 234**

(73) Patentinhaber: **BAYER AG**
**W-5090 Leverkusen 1 Bayerwerk (DE)**

(72) Erfinder: **Eichenauer, Herbert, Dr.**
**Gustav-Heinemann-Strasse 3**
**W-4047 Dormagen 1 (DE)**
Erfinder: **Leitz, Edgar, Dr.**
**Goethestrasse 63**
**W-4047 Dormagen (DE)**
Erfinder: **Ott, Karl-Heinz, Dr.**
**Paul-Klee-Strasse 54**
**W-5090 Leverkusen (DE)**
Erfinder: **Pitschtschan, Alfred, Dr.**
**Zur Eiche 33**
**W-5067 Kürten-Eichhof (DE)**

**EP 0 332 987 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

ABS-Polymerisate zeichnen sich durch ein ausgewogenes Eigenschaftsbild hinsichtlich Zähigkeit, Wärmeformbeständigkeit, Verarbeitbarkeit und Oberflächenqualität aus. Bei der Herstellung von ABS-Typen mit speziellen Eigenschaften, (z.B. hoher Zähigkeit oder hoher Wärmeformbeständigkeit), können diese erwünschten Eigenschaften in der Regel nur mit gleichzeitigen Einbußen bei anderen Eigenschaften erzielt werden.

Ein besonderes Problem stellt die Herstellung von ABS-Produkten mit sehr hoher Kerbschlagzähigkeit dar: Beide praktisch benutzten Maßnahmen

a) Erhöhung des Pfropfkautschukgehalts,

b) Erhöhung des Molekulargewichts des Styrol/Acrylnitril-Copolymerisats (Harzmatrix) sowie deren Kombination führen zu einer starken Erhöhung der Schmelzviskosität, d.h. zu einer deutlich schlechteren thermoplastischen Verarbeitbarkeit sowie damit einhergehenden Oberflächenstörungen.

Die europäische Patentanmeldung 222234 beschreibt eine Formmasse aus

A einem Polymerisat vinylaromatischer Monomerer,
B einem Styrol und Acrylnitril enthaltenden Polymerisat und
C einem Copolymerisat der Formel

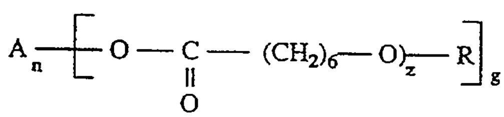

worin der in eckigen Klammern stehende Rest u. a. durch ringöffnende Polymerisation von Lactonen entstanden sein kann. Demgegenüber beruhen die erfindungsgemäßen Formmassen auf Mischungen von ABS mit Blockcopolymerisaten auf Polycarbonatbasis.

Es wurde nun gefunden, daß ABS-Polymerisate mit sehr hoher Zähigkeit und gleichzeitiger ausgezeichneter Verarbeitbarkeit durch Zusatz eines besonderen Blockcopolymeren erhalten werden.

Gegenstand der vorliegenden Erfindung sind thermoplastische Formmassen, enthaltend

A) 5-90 Gew.-Teile, bevorzugt 10-80 Gew.-Teile und besonders bevorzugt 20-75 Gew.-Teile, eines oder mehrerer kautschukfreier thermoplastischer Polymerisate von Styrol, α-Methylstyrol, kernsubstituiertem Styrol, Methylmethacrylat, Acrylnitril, Methacrylnitril, Maleinsäureanhydrid, N-substituiertem Maleinimid, Vinylacetat, oder Mischungen daraus

B) 5-90 Gew.-Teile, bevorzugt 10-80 Gew.-Teile, besonders bevorzugt 15-60 Gew.-Teile, eines oder mehrerer Pfropfpolymerisate aus

B1) 5-90 Gew.-Teilen, vorzugsweise 30-80 Gew.-Teilen, Styrol, α-Methylstyrol, kernsubstituiertem Styrol, Methylmethacrylat, Acrylnitril, Methacrylnitril, Maleinsäureanhydrid, N-substituiertem Maleinimid, Vinylacetat oder Mischungen daraus auf

B2) 95-10 Gew.-Teile, vorzugsweise 70-20 Gew,Teile, eines Kautschuks mit einer Glastemperatur ≤ 10°C und

C) 0,25-40 Gew,-Teile, bevorzugt 0,5-30 Gew,-Teile, eines Blockcopolymeren der idealisierten Formel (I)

$$A-B-A;\ B-A-B \text{ oder } (A-B)_x \quad \text{(I)}$$

mit

x = 1 bis 40, insbesondere x = 1 bis 20, worin

A = Rest eines Homopolymeren von Styrol, Vinyl-naphthalin, Butadien, Isopren, insbesondere Styrol oder Butadien, und

B = Rest eines Homopolymeren eines cyclischen Carbonates der allgemeinen Formeln (III) bis (IV),

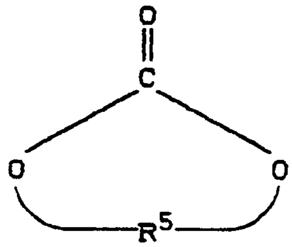

(III)

worin

$R^5 = -(CH_2)_n-$ mit n = 3 - 12,

$-CH_2CH_2CH(CH_3)-$,

$-CH_2CH_2OCH_2CH_2-$,

$-CH_2CH_2OCH_2CH_2OCH_2CH_2-$,

$-CH_2CH(CH_3)CH_2CH_2C(CH_3)_2CH_2-$,

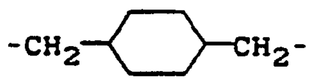, 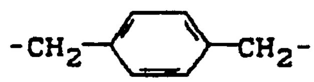 ,

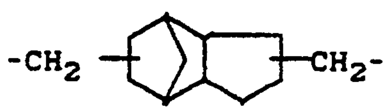 ,

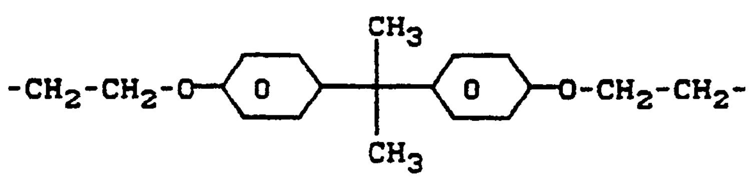 ,

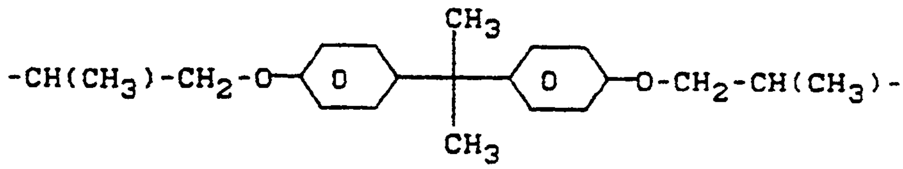

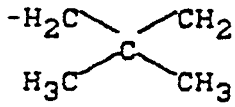,

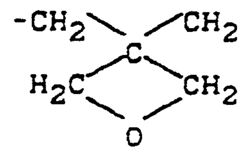,

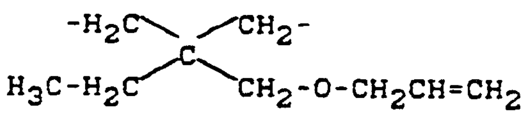,

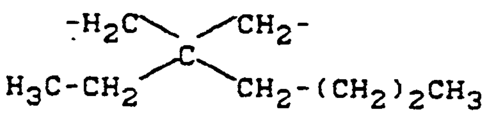

und

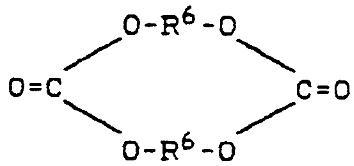

(IV)

mit

$R^6 = -(CH_2)_n$ mit $n = 4 - 12$,
$-CH_2CH_2OCH_2CH_2-$ ,
$-CH_2CH_2OCH_2CH_2OCH_2CH_2-$

bedeutet, wobei die mittleren Molekulargewichte der Blöcke A und B > 800, vorzugsweise > 1.000, besonders bevorzugt > 10.000 sind.

Ein weiterer Erfindungsgegenstand sind Formmassen, die zusätzlich zu den Komponenten A) + B) + C) als Komponente D) 1 bis 40 Gewichtsteile (bezogen auf 100 Gew.-Teile A + B + C) eines linearen aliphatischen Polycarbonats enthalten.

Die erfindungsgemäßen Mischungen aus Copolymerisat, Pfropfpolymerisat, Blockcopolymerisat und gegebenenfalls linearem aliphatischem Polycarbonat können die üblichen Zusatzstoffe wie z.B. Flammschutzmittel, Stabilisatoren, Entformungsmittel, Gleitmittel, Antistatika, Füllstoffe in den üblichen Mengen enthalten.

Durch den Zusatz des Blockcopolymeren C) werden Formmassen vom ABS-Typ erhalten, die neben einer hohen Zähigkeit eine verbesserte Fließfähigkeit und somit eine verbesserte Verarbeitbarkeit haben. Dies bedeutet, daß auch hochzähe großformatige Spritzgußteile, und solche mit komplizierter Form, z.B. Computergehäuse, Teile für Kraftfahrzeuge, aufgrund der verbesserten Fließfähigkeit leichter, und/oder bei tieferen Temperaturen hergestellt werden können.

Erfindungsgemäß geeignete thermoplastische Polymerisate A) sind solche aus Styrol, α-Methylstyrol, p-Methylstyrol, Vinyltoluol, Halogenstyrol, Methylacrylat, Methylmethacrylat, Acrylnitril, Methacrylnitril, Maleinsäureanhydrid, N-substituiertem Maleinimid oder Mischungen aus diesen Monomeren.

Die thermoplastischen Polymerisate A) sind harzartig, thermoplastisch und kautschukfrei. Besonders

bevorzugte Polymerisate A) sind solche aus Styrol, Methylmethacrylat, Styrol/Acrylnitril-Gemischen, Styrol/Acrylnitril/Methylmethacrylat-Gemischen, Styrol/Methylmethacrylat-Gemischen, Acrylnitril/Methylmethacrylat-Gemischen, α-Methylstyrol/Acrylnitril-Gemischen, Styrol/α-Methylstyrol/Acrylnitril-Gemischen, α-Methylstyrol/Methylmethacrylat/Acrylnitril-Gemischen, Styrol/α-Methylstyrol/Methylmethacrylat-Gemischen, Styrol/α-Methylstyrol/Methylmethacrylat/Acrylnitril-Gemischen, Styrol/Maleinsäureanhydrid-Gemischen, Methylmethacrylat/Maleinsäureanhydrid-Gemischen, Styrol/Methylmethacrylat/Maleinsäureanhydrid-Gemischen.

Die thermoplastischen Polymerisate A) sind bekannt und lassen sich durch radikalische Polymerisation, insbesondere durch Emulsions-, Suspensions-, Lösungs- oder Massepolymerisation herstellen. Sie besitzen vorzugsweise Molekulargewichte $\overline{M}_w$ von 20.000 bis 200.000 und Grenzviskositäten [η] von 20 bis 110 ml/g (gemessen in Dimethylformamid bei 25°C).

Zur Herstellung der Pfropfpolymerisate (B) als Pfropfgrundlage geeignete Kautschuke sind insbesondere Polybutadien, Butadien/Styrol-Copolymerisate, Butadien/Acrylnitril-Copolymerisate, Polyisopren, EPM-Kautschuke (Ethylen/Propylen-Kautschuke), EPDM-Kautschuke (Ethylen/Propylen/ Dien-Kautschuke, die als Dien ein nichtkonjugiertes Dien wie z.B. Hexadien-1,5 oder Norbornadien in kleinen Mengen enthalten) und Alkylacrylatkautschuke auf der Basis von $C_1$-$C_8$-Alkylacrylaten, insbesondere von Ethyl-, Butyl-, Ethylhexylacrylat.

Die Alkylacrylatkautschuke können gegebenenfalls bis zu 30 Gew.-% (bezogen auf Kautschukgewicht) Monomere wie Vinylacetat, Acrylnitril, Styrol, Methylmethacrylat und/oder Vinylether copolymerisiert enthalten. Die Alkylacrylatkautschuke können auch kleinere Mengen, vorzugsweise bis zu 5 Gew.-% (bezogen auf Kautschukgewicht) vernetzend wirkender ethylenisch ungesättigter Monomerer einpolymerisiert enthalten. Solche Vernetzer sind z.B. Alkylendiol-diacrylate und -methacrylate, Polyester-diacrylate und -methacrylate, Divinylbenzol, Trivinylbenzol, Triallylcyanurat, Allyl-acrylat, Allylmethacrylat, Butadien oder Isopren. Acrylatkautschuke können auch Kern-Mantel-Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Bevorzugte Kautschuke zur Herstellung der Pfropfpolymerisate B) sind Dien- und Alkylacrylatkautschuke.

Die Kautschuke liegen im Pfropfpolymerisat B) in Form wenigstens partiell vernetzter Teilchen eines mittleren Teilchendurchmessers von 0,05 bis 20,0 μm, bevorzugt von 0,1 bis 2,0 μm und besonders bevorzugt von 0,1 bis 0,8 μm vor. Hierbei bedeutet Teilchendurchmesser immer den mittleren Teilchendurchmesser $d_{50}$, ermittelt durch Ultrazentrifugenmessungen nach W. Scholtan et al., Kolloid-Z. u. Z. Polymere 250 (1972), 782-796.

Die Pfropfpolymerisate B) werden durch radikalische Pfropfpolymerisation der Monomeren B.1) in Gegenwart der zu bepfropfenden Kautschuke B.2) hergestellt.

Bevorzugte Herstellungsverfahren für die Pfropfpolymerisate B) sind Emulsions-, Lösungs-, Masse- oder Suspensionspolymerisation sowie Kombinationen aus diesen Verfahren in an sich bekannter Weise. Besonders bevorzugte Pfropfpolymerisate B) sind die ABS-Polymerisate.

Die Blockcopolymerisate C) sind Verbindungen der idealisierten Formeln (I)

$$A-B-A\,;\,B-A-B \text{ oder } (A-B)_x \quad \text{(I)}$$

mit

x = 1 bis 40, insbesondere x = 1 bis 20, worin

A = Rest eines Homopolymeren von Styrol, Vinylnaphthalin, Butadien, Isopren, insbesondere Styrol oder Butadien, und

B = Rest eines Homopolymeren eines cyclischen Carbonates der allgemeinen Formeln (III) bis (IV),

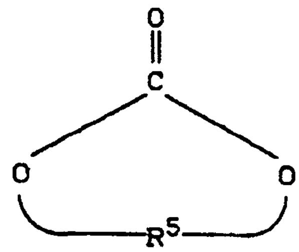

(III)

mit

$R^5$ = $-(CH_2)_n-$ mit n = 3 - 12,
$-CH_2CH_2CH(CH_3)-$,
$-CH_2CH_2OCH_2CH_2-$,
$-CH_2CH_2OCH_2CH_2OCH_2CH_2-$,
$-CH_2CH(CH_3)CH_2CH_2C(CH_3)_2CH_2-$,

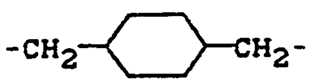, 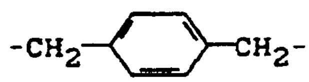,

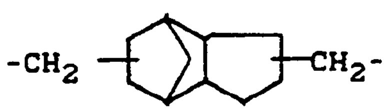,

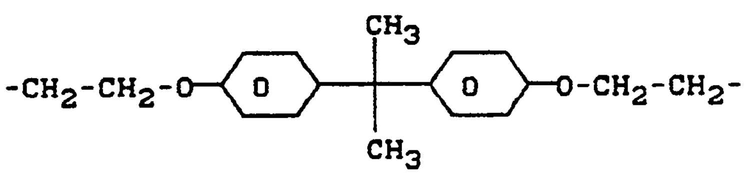,

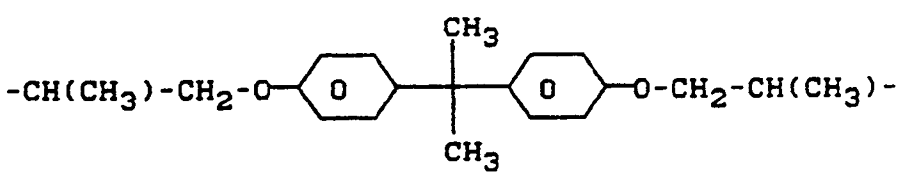

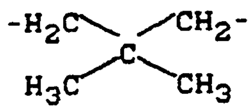 , 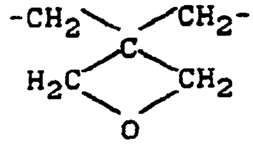 ,

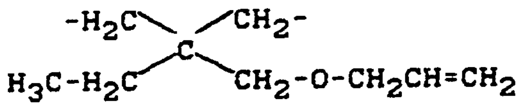 ,

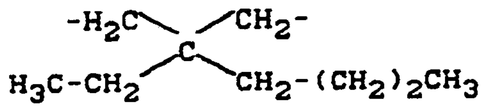

und

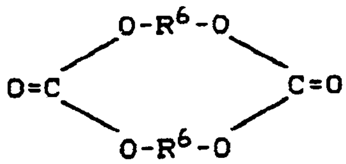

(IV)

mit

$$R^6 = -(CH_2)_n \text{ mit } n = 4 - 12,$$
$$-CH_2CH_2OCH_2CH_2- ,$$
$$-CH_2CH_2OCH_2CH_2OCH_2CH_2-$$

wobei die mittleren Molekulargewichte der Blöcke A und B > 800, vorzugsweise > 1.000, besonders bevorzugt > 10.000 sind.

Bevorzugte cyclische Carbonate (III) und (IV) sind Trimethylenglykolcarbonat, Neopentylglykolcarbonat, 1,4-Butandiolcarbonat sowie dimere Carbonate des Pentandiols oder des Hexandiols. Besonders bevorzugt ist Neopentylglykolcarbonat.

Die Blockcopolymeren enthalten die Blöcke A bzw. B in Mengen von 5 bis 95 Gew.-% (bezogen auf Gesamtmenge A + B), vorzugsweise in Mengen von 5 bis 50 Gew.-% A und 95 bis 50 Gew.-% B sowie 5 bis 50 Gew.-% B und 95 bis 50 Gew.-% A.

Die Blockcopolymeren können durch anionische Polymerisation in an sich bekannter Weise hergestellt werden, besonders bevorzugt ist die mehrstufige anionische Polymerisation bei tiefen Temperaturen in verdünnter Lösung gemäß DE-OS 3607627.

Bevorzugt eingesetzte Blockcopolymere C) sind die gemäß DE-OS 3607627 erhaltenen Produkte mit Molekulargewichten $\overline{M}_w$ im Bereich von 2.000 bis 500.000, bevorzugt von 5.000 bis 400.000.

Geeignete lineare aliphatische Polycarbonate gemäß Komponente D) sind Verbindungen der allgemeinen Formel (V)

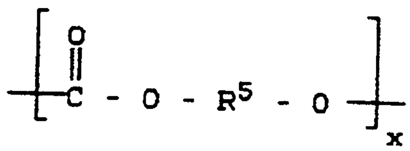

(V)

worin $R^5$ die oben definierten Reste bedeutet und x eine ganze Zahl entsprechend einem Molekulargewicht von 2.000 bis 500.000 bedeutet.

Bevorzugtes aliphatisches Polycarbonat D) ist Polyneopentylglykolcarbonat (VI).

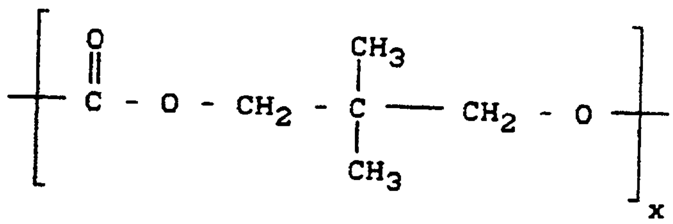

(VI)

Die aliphatischen Polycarbonate D) können nach üblichen Methoden, z.B. durch Umesterung oder Phosgenierung von Diolen (DE-OS 2001091, FR-PS 1391512, DE-OS 1031512, DE-OS 2446107, DE-OS 2605024, EP 002641, DE-OS 2447349), besser aber durch ringöffnende Masse- oder Lösungspolymerisation von cyclischen aliphatischen Carbonaten hergestellt werden (DE-OS 1545116, 1545117, 3103135 und 3204078).

Das bevorzugte Herstellungsverfahren ist die anionische ringöffnende Lösungspolymerisation von cyclischen aliphatischen Carbonaten bei tiefen Temperaturen gemäß DE-OS 3607625.

Cyclische aliphatische Carbonate für die Herstellung der aliphatischen Polycarbonat-Komponente in den erfindungsgemäßen Formmassen sind Verbindungen der Formel (III) und/oder (IV)

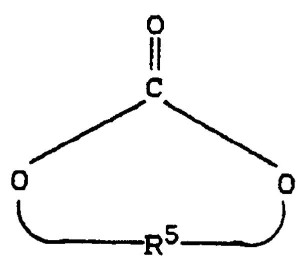

(III),

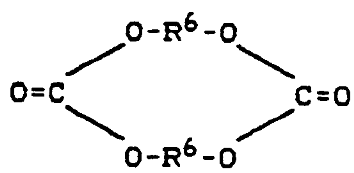

(IV)

worin
$R^5$ und $R^6$ die oben angegebene Bedeutung haben.

Bevorzugt werden Carbonate der Formel (III) verwendet. Besonders bevorzugt ist das Carbonat mit

$R^5$ =

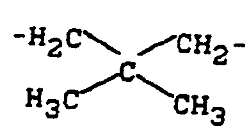

Bevorzugte aliphatische Polycarbonate D) sind die gemäß DE-OS 3607625 erhaltenen Produkte mit Molekulargewichten $\overline{M}_w$ im Bereich von 2.000 bis 500.000, bevorzugt von 15.000 bis 350.000.

Die erfindungsgemäßen Mischungen, enthaltend die Komponenten A), B) und C), gegebenenfalls D) und gegebenenfalls die üblichen Zusatzstoffe wie Flammschutzmittel, Gleitmittel, Stabilisatoren, Pigmente, Entformungsmittel, Antistatika, Füllstoffe werden hergestellt, indem man die jeweiligen Bestandteile in bekannter Weise simultan oder sukzessive bei Zimmertemperatur oder bei höherer Temperatur vermischt und danach bei Temperaturen von 150°C bis 300°C in gebräuchlichen Aggregaten wie Innenknetern, Extrudern oder Doppelwellenschnecken schmelzcompoundiert oder schmelzextrudiert.

Die Formmassen der vorliegenden Erfindung können zur Herstellung von Formkörpern jeder Art verwendet werden, wobei übliche Herstellungsweisen benutzt werden können, insbesondere können Formkörper durch Spritzguß hergestellt werden.

Eine weitere Form der Verarbeitung der erfindungsgemäßen Formmassen ist die Herstellung von Formkörpern durch Tiefziehen aus vorher nach bekannten Verfahren hergestellten Platten oder Folien.

## Beispiele

### Thermoplastisches Polymerisat A

Statistisches Styrol/Acrylnitril = 72 : 28 — Copolymerisat mit einem $\overline{M}_w$ von ca. 115.000 und einer Uneinheitlichkeit $\overline{M}_w/\overline{M}_n - 1 \leq 2{,}0$.

### Pfropfpolymerisat B

Pfropfprodukt erhalten durch Emulsionspolymerisation von 50 Gew.-% eines Styrol/Acrylnitril-Gemisches (Gew.-Verhältnis 72 : 28) auf 50 Gew.-% teilchenförmiges Polybutadien mit einem mittleren Teilchendurchmesser ($d_{50}$) von 0,4 µm.

### Blockcopolymer C

C 1 : Blockcopolymer vom Typ A-B, wobei A Polystyrol und B Polyneopentylglykolcarbonat darstellen. Das Blockcopolymere wurde durch anionische Polymerisation nach DE-OS 3607627 erhalten. Das Gewichtsverhältnis der Monomeren Styrol und Neopentylglykolcarbonat beträgt 20 : 80, die relative Lösungsviskosität $\eta_{rel}$ des Polymeren beträgt 2,81 (2 Gew.-%ige Lösung in $CH_2Cl_2$ bei 20°C).

C 2 : Blockcopolymer vom Typ A-B, wobei A Polyisopren und B Polyneopentylglykolcarbonat darstellen. Die Herstellung erfolgt nach DE-OS 3607627. Das Gewichtsverhältnis der Monomeren Isopren und Neopentylglykolcarbonat beträgt 20 : 80, die relative Lösungsviskosität $\eta_{rel}$ des Polymeren beträgt 2,28 (2 Gew.-%ige Lösung in $CH_2Cl_2$ bei 20°C).

C 3 : Blockcopolymer vom Typ A-B, wobei A Polystyrol und B ein Copolymer aus Neopentylglykolcarbonat und ε-Caprolacton darstellen. Die Herstellung erfolgte nach dem in DE-OS 3607627 beschriebenen Verfahren. Das Gewichtsverhältnis der Monomeren Styrol, Neopentylglykolcarbonat und ε-Caprolacton beträgt 20 : 70 : 10, die relative Lösungsviskosität $\eta_{rel}$ des Polymeren beträgt 2,18 (2 Gew.-%ige Lösung in $CH_2Cl_2$ bei 20°C).

### Aliphatisches Polycarbonat D

Aliphatisches Polycarbonat auf Basis von Neopentylglycol (2,2-Dimethylpropandiol) erhalten durch ringöffnende anionische Polymerisation von Neopentylglykolcarbonat mit einer relativen Lösungsviskosität $\eta_{rel}$ von 3,17 (2 Gew.-%ige Lösung in $CH_2Cl_2$ bei 20°C).

Die Compoundierung der Komponenten A), B), C) und gegebenenfalls D) zusammen mit 0,1 Gew.-Teilen eines Silikonöls erfolgte auf einem 1,3 l-Innenkneter bei Temperaturen zwischen 160° und 200°C.

Die Herstellung der Formkörper erfolgte auf einer Spritzgießmaschine bei 240°C.

Die Kerbschlagzähigkeit ($a_k$) wurde bei Raumtemperatur nach DIN 53453 (Einheit : kJ/m²) ermittelt, die Bestimmung der Verarbeitbarkeit erfolgte durch Messung des Volumen-Fließindex MVI nach DIN 53735 U (Einheit : cm³/10 min.) sowie des notwendigen Fülldruckes (siehe F. Johannaber, Kunststoffe 74 (1984), 1, Seiten 2-5).

In Tabelle 1 sind die Zusammensetzungen der untersuchten Formmassen sowie die erhaltenen Prüfdaten zusammengestellt. Gegenüber den Vergleichsversuchen besitzen die erfindungsgemäßen Einstellungen niedrigere Fülldruckwerte bzw. höhere MVI-Werte sowie ein deutlich erhöhtes Zähigkeitsniveau.

Tabelle 1: Zusammensetzungen und Prüfdaten der Formmassen

| Beispiel Nr. | A Gew.-Teile | B Gew.-Teile | C 1 Gew.-Teile | C 2 Gew.-Teile | C 3 Gew.-Teile | D Gew.-Teile | $a_k$ kJ/m² | MVI | Fülldruck (240° C) bar |
|---|---|---|---|---|---|---|---|---|---|
| 1. | 50 | 40 | 10 | - | - | - | 26 | 6,3 | 344 |
| 2. | 40 | 40 | 20 | - | - | - | 25 | 9,5 | 327 |
| 3. | 50 | 40 | - | 10 | - | - | 25 | 6,4 | 342 |
| 4. | 40 | 40 | - | 20 | - | - | 30 | 11,6 | 315 |
| 5. | 50 | 40 | - | - | 10 | - | 25 | 8,0 | 329 |
| 6. | 40 | 40 | - | - | 20 | - | 25 | 16,0 | 287 |
| 7. | 40 | 30 | 20 | - | - | 10 | 24 | 14,5 | 299 |
| 8. | 30 | 40 | - | - | 20 | 10 | 26 | 13,8 | 305 |
| 9. (Vergleich) | 60 | 40 | - | - | - | - | 17 | 7,2 | 375 |

## Patentansprüche

1. Thermoplastische Formmassen, enthaltend

A) 5-90 Gew.-Teile eines oder mehrerer kautschukfreier thermoplastischer Polymerisate von Styrol, α-Methylstyrol, kernsubstituiertem Styrol, Methylmethacrylat, Acrylnitril, Methacrylnitril, Maleinsäureanhydrid, N-substituiertem Maleinimid, Vinylacetat, oder Mischungen daraus

B) 5-90 Gew.-Teile eines oder mehrerer Pfropfpolymerisate aus

B1) 5-90 Gew.-Teilen Styrol, α-Methylstyrol, kernsubstituiertem Styrol, Methylmethacrylat, Acrylnitril, Methacrylnitril, Maleinsäureanhydrid, N-substituiertem Maleinimid, Vinylacetat oder Mischungen daraus auf

B2) 95-10 Gew.-Teilen eines Kautschuks mit einer Glastemperatur ≤ 10°C und

C) 0,25-40 Gew.-Teile eines Blockcopolymeren der idealisierten Formel (I)

$$A-B-A;\ B-A-B \text{ oder } (A-B)_x \quad (I)$$

mit

x = 1 bis 40, worin

A = Rest eines Homopolymeren von Styrol, Vinylnaphthalin, Butadien, Isopren, insbesondere Styrol oder Butadien, und

B = Rest eines Homopolymeren eines cyclischen Carbonates der allgemeinen Formeln (III) bis (IV),

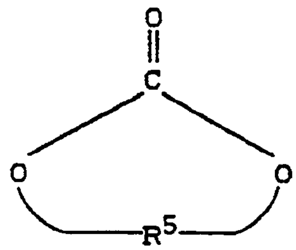

(III)

mit

$R^5$ = $-(CH_2)_n-$ mit $n = 3 - 12$,
$-CH_2CH_2CH(CH_3)-$,
$-CH_2CH_2OCH_2CH_2-$,
$-CH_2CH_2OCH_2CH_2OCH_2CH_2-$,
$-CH_2CH(CH_3)CH_2CH_2C(CH_3)_2CH_2-$,

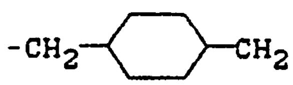, 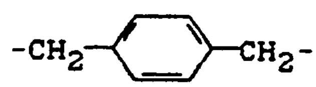,

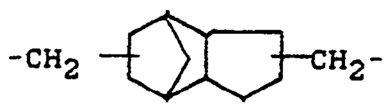,

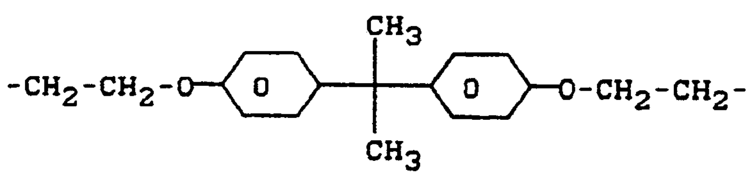,

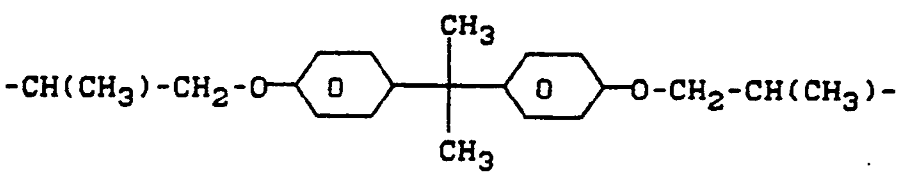

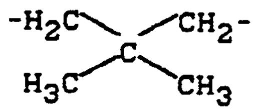 ,

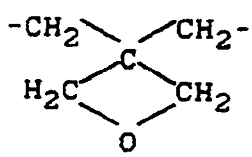 ,

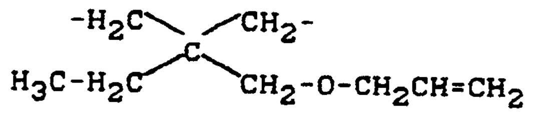 ,

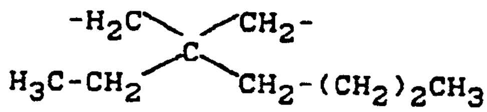

und

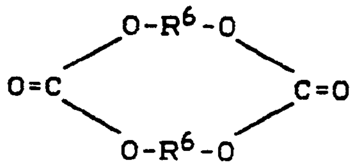 (IV)

mit

$$R^6 = -(CH_2)_n \text{ mit } n = 4 - 12,$$
$$-CH_2CH_2OCH_2CH_2- ,$$
$$-CH_2CH_2OCH_2CH_2OCH_2CH_2-$$

wobei die mittleren Molekulargewichte der Blöcke A und B > 800 sind.

2. Formmassen gemäß Anspruch 1, dadurch gekennzeichnet, daß zusätzlich zu A) + B) + C) 1 bis 40 Gew.-Teile (bezogen auf 100 Gew.-Teile A + B + C) eines linearen aliphatischen Polycarbonats D) enthalten sind.

3. Formmassen gemäß Anspruch 1, dadurch gekennzeichnet, daß C) ein durch anionische Polymerisation hergestelltes Polymerisat ist.

4. Formmassen gemäß Anspruch 2, dadurch gekennzeichnet, daß D) ein durch anionische ringöffnende Lösungs- Polymerisation hergestelltes Polymerisat ist.

5. Formmassen gemäß Anspruch 1, dadurch gekennzeichnet, daß C) ein Copolymeres aus 5-95 Gew.-% Styrol und 95-5 Gew.-% Neopentylglykolcarbonat ist.

6. Formmassen gemäß Anspruch 2, dadurch gekennzeichnet, daß D) Polyneopentylglykolcarbonat ist.

## Claims

1. Thermoplastic moulding compounds containing

A) 5 to 90 parts by weight of one or more rubber-free, thermoplastic polymers of styrene, α-methyl styrene, nucleus-substituted styrene, methyl methacrylate, acrylonitrile, methacrylonitrile, maleic anhydride, N-substituted maleic imide, vinyl acetate or mixtures thereof,

B) 5 to 90 parts by weight of one or more graft polymers of

B1) 5 to 90 parts by weight styrene, α-methyl styrene, nucleus-substituted styrene, methyl methacrylate, acrylonitrile, methacrylonitrile, maleic anhydride, N-substituted maleic imide, vinyl acetate or mixtures

thereof on

B2) 95 to 10 parts by weight of a rubber having a glass temperature of ≤ 10°C and

C) 0.25 to 40 parts by weight of a block copolymer having the following idealized formula

$$A-B-A\,;\,B-A-B \text{ or } (A-B)_x \quad (I)$$

in which

x = 1 to 40,

A is the residue of a homopolymer of styrene, vinyl naphthalene, butadiene, isoprene, more particularly styrene or butadiene, and

B is the residue of a homopolymer of a cyclic carbonate corresponding to general formulae (III) to (IV) :

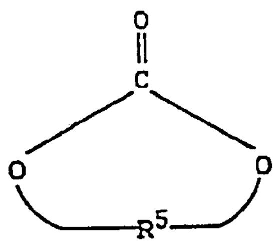

(III)

in which

in which

$R^5$ = $-(CH_2)_n-$ with n = 3 - 12,

$-CH_2CH_2CH(CH_3)-$,

$-CH_2CH_2OCH_2CH_2-$,

$-CH_2CH_2OCH_2CH_2OCH_2CH_2-$,

$-CH_2CH(CH_3)CH_2CH_2C(CH_3)_2CH_2-$,

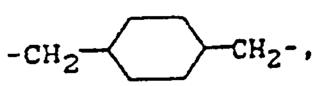

,

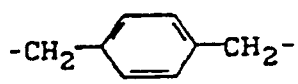

,

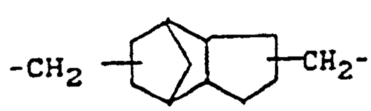

,

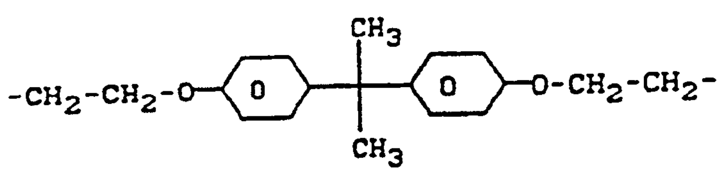

,

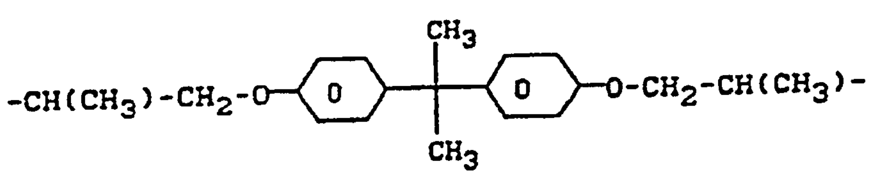

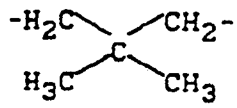 ,

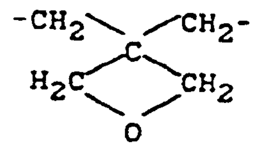 ,

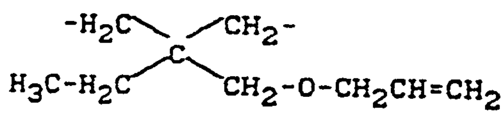 ,

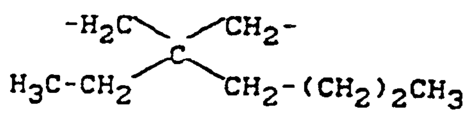

and

and

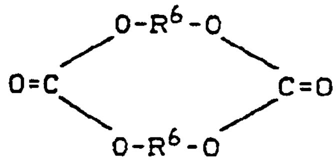

(IV)

in which

$R^6$ = $-(CH_2)_n$ with n = 4 - 12,
$-CH_2CH_2OCH_2CH_2-$ ,
$-CH_2CH_2OCH_2CH_2OCH_2CH_2-$

the average molecular weight of the blocks A and B being > 800.

2. Moulding compounds as claimed in claim 1, characterized in that, in addition to A) + B) + C), they contain 1 to 40 parts by weight (based on 100 parts by weight A + B + C) of a linear aliphatic polycarbonate D).

3. Moulding compounds as claimed in claim 1, characterized in that C) is a polymer produced by anionic polymerization.

4. Moulding compounds as claimed in claim 1, characterized in that D) is a polymer produced by anionic ringopening solution polymerization.

5. Moulding compounds as claimed in claim 1, characterized in that C) is a copolymer of 5 to 95% by weight styrene and 95 to 5% by weight neopentyl glycol carbonate.

6. Moulding compounds as claimed in claim 2, characterized in that D) is polyneopentyl glycol carbonate.

**Revendications**

1. Matières à mouler thermoplastique contenant :

A) 5 à 90 parties en poids d'un ou plusieurs polymères thermoplastiques, exempts de caoutchouc, du styréne, de l'α-méthyl-styrène, d'un styrène substitué dans le noyau, du méthacrylate de méthyle, de l'acrylonitrile, du méthacrylonitrile, de l'anhydride maléique, d'un maléimide substitué à l'azote, de l'acétate de vinyle ou d'un mélange de ces monomères,

B) 5 a 90 parties en poids, d'un ou plusieurs polymères greffés de

B1) 5 à 90 parties en poids de styrène, d'α-méthyl-styrène, d'un styrène substitué dans le noyau, de méthacrylate de méthyle, d'acrylonitrile, de méthacrylonitrile, d'anhydride maléique, d'un maléimide substitué à l'azote, de l'acétate de vinyle ou d'un mélange de tels monomères, sur

B2) 95 à 10 parties en poids d'un caoutchouc ayant une température de transition du second ordre inférieure ou égale à 10°C, et

C) 0,25 à 40 parties en poids d'un copolymère séquencé de formule idéalisée I :

$$A-B-A\,;\,B-A-B \text{ ou } (A-B)_x \quad (I)$$

dans laquelle

x = 1 à 40,

A représente le radical d'un homopolymère du styrène, du vinylnaphtalène, du butadiène, de l'isoprène, plus spécialement du styrène ou du butadiène, et

B est le radical d'un homopolymère d'un carbonate cyclique de formule générale III ou IV :

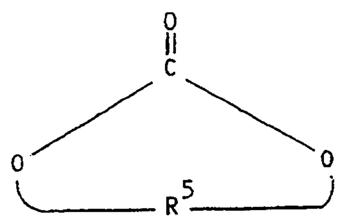

(III)

dans laquelle

$R^5 = -(CH_2)_n-$ avec n = 3 - 12,

$-CH_2CH_2CH(CH_3)-$,

$-CH_2CH_2OCH_2CH_2-$,

$-CH_2CH_2OCH_2CH_2OCH_2CH_2-$,

$-CH_2CH(CH_3)CH_2CH_2C(CH_3)_2CH_2-$,

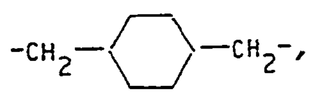

,

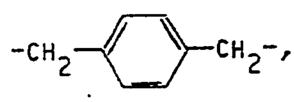

,

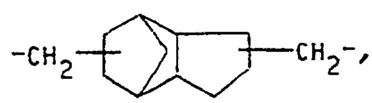

,

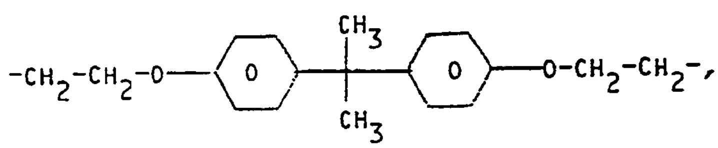

,

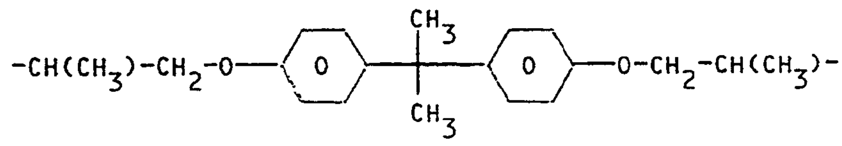

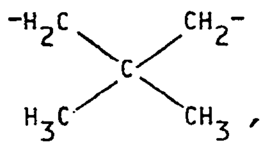 ,

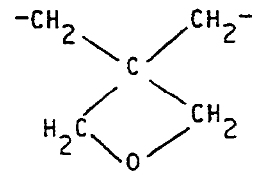 ,

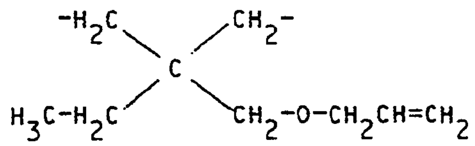 ,

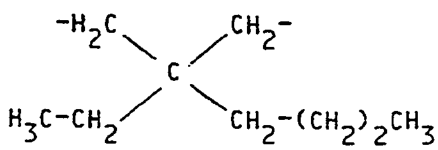

et

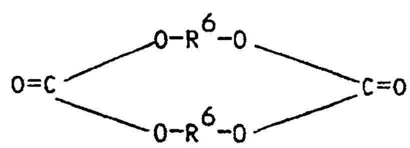 (IV)

dans laquelle

$$R^6 = -(CH_2)_n- \text{ avec } n = 4 - 12,$$
$$-CH_2CH_2OCH_2CH_2-,$$
$$-CH_2CH_2OCH_2CH_2OCH_2CH_2-$$

les poids moléculaires moyens des blocs A et B étant supérieurs à 100.

2. Matières à mouler selon la revendication 1, caractérisées en ce qu'elles contiennent, en plus de A + B + C, de 1 à 40 parties en poids (pour 100 parties en poids de A + B + C) d'un polycarbonate aliphatique linéaire D).

3. Matières à mouler selon la revendication 1, caractérisées en ce que C) est un polymère préparé par polymérisation anionique.

4. Matières a mouler selon la revendication 2, caractérisées en ce que D) est un polymère préparé par polymérisation anionique en solution avec ouverture du cycle.

5. Matières à mouler selon la revendication 1, caractérisées en ce que C) est un copolymère de 5 a 95% en poids de styrène et 95 à 5% en poids de carbonate du glycol néopentylique.

6. Matières a mouler selon la revendication 2, caractérisées en ce que D) est un polycarbonate du glycol néopentylique.